# FASCICULE DE BREVET EUROPEEN

(11) **EP 3 860 915 B1**
(45) Date de publication et mention de la délivrance du brevet: **07.06.2023**
(21) Numéro de dépôt: 19773875.0
(22) Date de dépôt: 30.09.2019
(51) Int. Cl.: B64G 1/22, B64G 1/66, H01Q 1/08, H01Q 1/28

(54) **DISPOSITIF DE DEPLOIEMENT**
EINSATZVORRICHTUNG
DEPLOYMENT DEVICE

(30) Priorité: 04.10.2018 FR 1801048
(43) Date de publication de la demande: 11.08.2021
(73) Titulaire: THALES, 92400 Courbevoie (FR)
(72) Inventeur: LABARTHE, Julien, 06156 CANNES LA BOCCA CEDEX (FR); TEXIER, Emmanuel, 06156 CANNES LA BOCCA CEDEX (FR)
(74) Mandataire: Atout PI Laplace
(86) Numéro de dépôt international: PCT/EP2019/076426
(87) Numéro de publication internationale: WO 2020/070058

(56) Documents cités:
- EP-A2- 1 189 301
- WO-A1-2005/097595
- FR-A1- 3 054 732
- US-B1- 7 180 470
- US-B1- 9 004 409

## Description

La présente invention concerne un dispositif de déploiement de deux instruments. Elle s'applique notamment au domaine des équipements spatiaux qui doivent être déployés en orbite et plus particulièrement aux équipements spatiaux pour satellites, tels que des antennes, des miroirs, ou autres instruments. Toutefois, l'invention s'applique à tout autre domaine dans lequel il est souhaitable de déployer un ensemble d'au moins deux instruments d'une structure porteuse.

L'invention est décrite dans cette demande de brevet dans le domaine spatial, avec pour exemple principal des antennes en tant qu'instruments puisque les antennes sont particulièrement concernées par l'invention. Néanmoins, l'invention peut s'appliquer de façon similaire à d'autres instruments et/ou dans un contexte autre que spatial.

C'est une pratique courante de placer des antennes sur un satellite pour envoyer de la bande passante sur Terre. Les solutions existantes consistent à utiliser un mécanisme de gerbage simple ou double pour le stockage des antennes sur le satellite et un ensemble de bras avec un ensemble de moteurs dédiés à chaque antenne pour le déploiement de chaque antenne. Il en ressort que le nombre d'antennes par face du satellite est limité. De plus, pour pouvoir déployer plusieurs antennes, les solutions de l'art antérieur impliquent un nombre de bras et de moteurs élevé. Le document US 9004409 divulgue un dispositif de déploiement dans lequel les instruments de deux bras principaux différents sont superposés en configuration stockée. Cela a des conséquences négatives sur l'aménagement externe du satellite et résulte en une cinématique de déploiement complexe. Enfin, le fait de devoir embarquer un nombre de bras et de moteurs élevé signifie aussi que la masse de l'ensemble des mécanismes liés au déploiement des antennes est élevée, ce qui n'est pas souhaité.

L'invention vise à pallier tout ou partie des problèmes cités plus haut en proposant un dispositif de déploiement présentant l'avantage d'être peu encombrant, permettant un gain de place et de masse embarquée sur le satellite et une simplification de l'aménagement externe.

A cet effet, l'invention a pour objet un dispositif de déploiement destiné à être positionné sur une structure porteuse, comprenant:
- un premier instrument et un deuxième instrument,
- un mécanisme de déploiement comprenant :
   ∘ un bras principal relié à une face de la structure porteuse en un premier point d'attache d'une part et au premier instrument d'autre part, le deuxième instrument étant relié au bras principal,
   ∘ un moteur principal configuré pour actionner le bras principal par rapport à la face,
   ∘ un moteur secondaire configuré pour actionner le deuxième instrument par rapport au bras principal,
les deux instruments étant aptes à passer d'une configuration stockée l'un sur l'autre sur la face de la structure porteuse à une configuration déployée dans laquelle les deux instruments sont à distance l'un de l'autre et de la structure porteuse, et/ou inversement, par déplacement du deuxième instrument en rotation par le moteur secondaire.

Avantageusement, le mécanisme de déploiement comprend un bras secondaire relié au bras principal en un deuxième point d'attache d'une part et au deuxième instrument d'autre part.

Avantageusement, le moteur principal est configuré pour actionner le bras principal en rotation par rapport à la face de la structure porteuse selon un axe principal de rotation.

Avantageusement, la face de la structure porteuse s'étend selon un plan XY défini par un premier axe X et par un deuxième axe Y sensiblement perpendiculaire au premier axe X et l'axe principal est parallèle au plan XY.

Avantageusement, l'axe principal est sécant au plan XY.

Avantageusement, l'axe principal est perpendiculaire au plan XY.

Selon un mode de réalisation, N étant un nombre entier supérieur ou égal à 1, au moins le bras principal et/ou le bras secondaire s'il est présent est relié à l'instrument auquel le bras est relié par N sections de bras et N moteurs, chacun associé à une section de bras et configuré pour actionner la section de bras associée, de sorte à positionner l'instrument auquel ledit bras est relié relativement à l'autre des deux instruments.

Selon un mode de réalisation de l'invention, les instruments sont des antennes.

L'invention concerne aussi un satellite comprenant au moins un dispositif de déploiement tel que décrit dans cette demande.

L'invention sera mieux comprise et d'autres avantages apparaîtront à la lecture de la description détaillée d'un mode de réalisation donné à titre d'exemple, description illustrée par le dessin joint dans lequel :
- la figure 1 représente schématiquement un dispositif de déploiement en configuration stockée selon l'invention,
- la figure 2 représente schématiquement un dispositif de déploiement en configuration déployée selon l'invention,
- la figure 3 représente schématiquement un dispositif de déploiement selon l'invention,
- la figure 4 représente schématiquement un dispositif de déploiement selon l'invention en configuration stockée, en cours de déploiement et en configuration déployée,
- la figure 5 représente schématiquement une vue de dessus de la face de la structure porteuse sur laquelle repose un mode de réalisation du dispositif de déploiement selon l'invention,
- la figure 6 représente schématiquement une vue de dessus de la face de la structure porteuse sur laquelle repose un autre mode de réalisation du dispositif de déploiement selon l'invention,
- la figure 7 représente schématiquement un autre mode de réalisation d'un dispositif de déploiement selon l'invention en configuration déployée,
- la figure 8 représente schématiquement une vue de la cinématique de déploiement de deux dispositifs de déploiement selon l'invention,
- la figure 9 représente schématiquement un satellite comprenant au moins un dispositif de déploiement selon l'invention.

Par souci de clarté, les mêmes éléments porteront les mêmes repères dans les différentes figures.

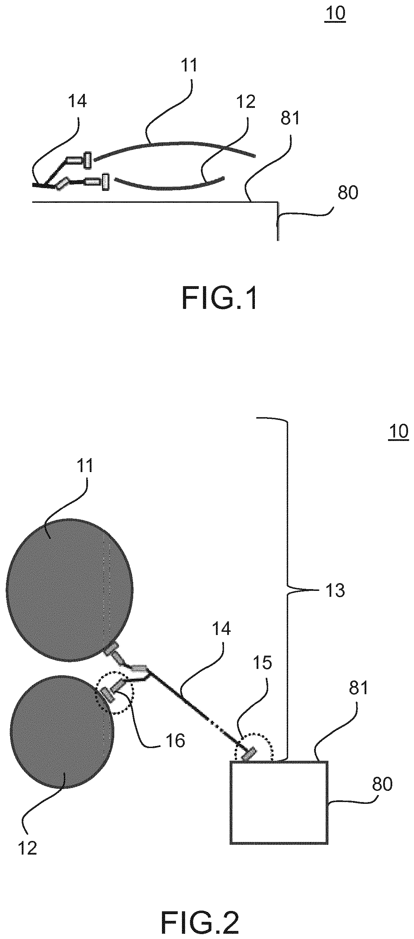

La **figure 1** représente schématiquement un dispositif de déploiement 10 en configuration stockée selon l'invention. Le dispositif de déploiement 10 selon l'invention est destiné à être positionné sur une structure porteuse 80, par exemple un satellite. Il comprend un premier instrument 11 et un deuxième instrument 12, par exemple des antennes, et un mécanisme de déploiement 13. Les deux instruments 11, 12 sont aptes à passer d'une configuration stockée l'un sur l'autre sur la face 81 de la structure porteuse 80 (comme représenté sur la figure 1) à une configuration déployée dans laquelle les deux instruments 11, 12 sont à distance l'un de l'autre et de la structure porteuse 80, et/ou inversement. Dans la configuration stockée, les instruments 11, 12 sont l'un sur l'autre. Ils peuvent être posés l'un sur l'autre avec un contact de la face de l'un sur une face de l'autre. Mais ils peuvent aussi être l'un au-dessus de l'autre sans contact physique entre eux. Aussi, les instruments 11, 12 l'un sur l'autre en configuration stockée ne sont pas obligatoirement superposés dans leur totalité. Un instrument peut être partiellement au-dessus de l'autre instrument.

En configuration stockée, les deux antennes peuvent être stockées en vis-à-vis ou en opposé. Autrement dit, une surface active de l'une des antennes peut être en face d'une surface active ou en face d'une surface inactive d'une autre antenne.

Il est à noter que l'invention est décrite avec deux antennes, mais il est évident que le même principe s'applique à trois antennes, ou plus, en les superposant en configuration stockée et en les déployant de façon similaire à ce qui sera expliqué ci-après.

La **figure 2** représente schématiquement le dispositif de déploiement 10 en configuration déployée selon l'invention. Le mécanisme de déploiement 13 comprend un bras principal 14 relié à une face 81 de la structure porteuse 80 en un premier point d'attache 82 d'une part et au premier instrument 11 d'autre part. Le deuxième instrument 12 est relié au bras principal 14. Il comprend aussi un moteur principal 15 configuré pour actionner le bras principal 14 par rapport à la face 81, et un moteur secondaire 16 configuré pour actionner le deuxième instrument 12 par rapport au bras principal 14. Le moteur principal 15 est avantageusement positionné au niveau du premier point d'attache 82. Le moteur principal 15 peut être un unique moteur. Le moteur principal 15 est à comprendre comme un ensemble de moteurs, par exemple deux moteurs, ou trois selon les besoins d'actionnement. Ainsi, le dispositif de déploiement selon l'invention permet le déploiement de deux antennes à l'aide de seulement deux ensembles de moteurs (moteur principal et moteur secondaire) et d'un seul bras.

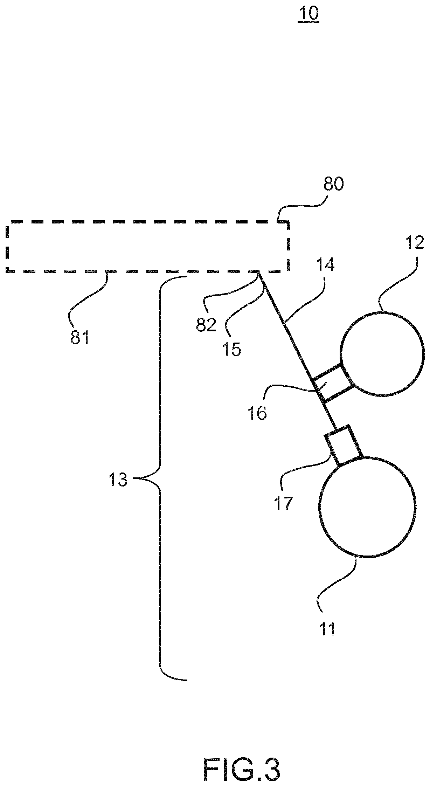

La **figure 3** représente schématiquement le dispositif de déploiement 10 selon l'invention. Le dispositif de déploiement 10 peut également comprendre un moteur additionnel 17 permettant l'orientation du premier instrument 11.

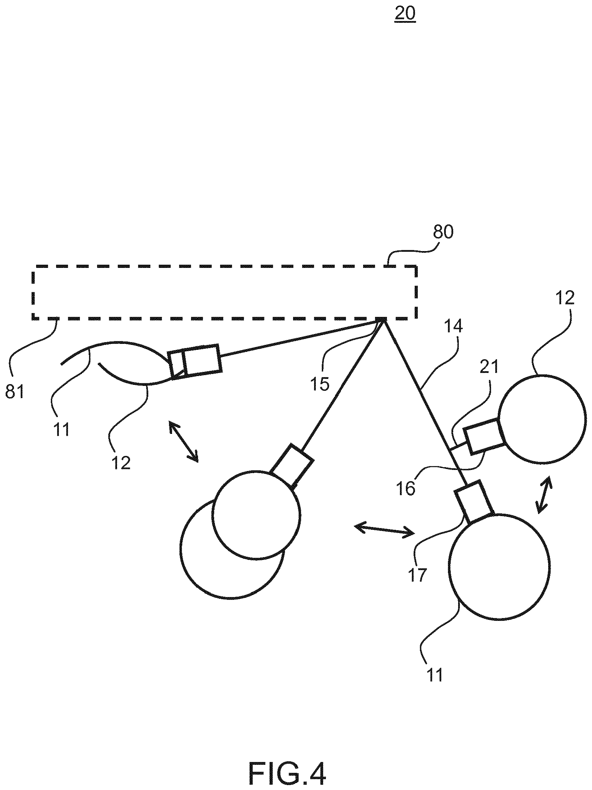

La **figure 4** représente schématiquement un dispositif de déploiement 20 selon l'invention en configuration stockée, en cours de déploiement et en configuration déployée.

Dans la configuration stockée, les deux instruments 11, 12 sont l'un sur l'autre et à proximité de la face 81 de la structure porteuse 80.

Une fois le satellite en position pour effectuer sa mission, le dispositif de déploiement 20 est activé pour passer dans sa configuration déployée. Le moteur principal 15 actionne le bras principal 14 qui est alors déplacé par rapport à la structure porteuse 80. Les instruments 11, 12 sont encore en position de vis-à-vis.

En configuration déployée, une fois que le bras principal 14 a atteint sa position déployée, les deux instruments sont déplacés l'un par rapport à l'autre. Le moteur secondaire 16 actionne le deuxième instrument 12 et l'oriente dans la position souhaitée. En fin de déploiement, c'est-à-dire en configuration déployée, les deux instruments 11, 12 sont à distance l'un de l'autre et de la structure porteuse 80.

Deux cas de figure peuvent être envisagés pour le déplacement des deux instruments l'un par rapport à l'autre. Si un instrument, par exemple 11, est stocké sur l'instrument 12 avec la face active de l'instrument 11 faisant face à la face inactive de l'instrument 12 (autrement dit, l'instrument 12 « tourne le dos » à l'instrument 11), alors le moteur secondaire 16 peut être configuré pour déplacer le deuxième instrument 12 en rotation autour d'un axe sensiblement perpendiculaire au bras principal 14. Les deux instruments, ainsi en positions décalées, regardent dans le même sens.

Si un instrument, par exemple 11, est stocké sur l'instrument 12 avec la face active de l'instrument 11 faisant face à la face active de l'instrument 12 (autrement dit, l'instrument 12 regarde l'instrument 11), alors le moteur secondaire 16 est configuré pour déplacer le deuxième instrument en rotation autour d'un axe situé dans un des plans entre les deux instruments en position stockée. Les deux instruments, ainsi en positions déployées, regardent alors dans le même sens. Le même déploiement a lieu pour les deux instruments 11, 12 stockés avec leurs faces inactives se faisant face.

Il est également possible de faire passer les deux instruments 11, 12 de la position déployée à la configuration stockée en procédant inversement : le moteur secondaire 16 actionne le deuxième instrument 12 pour l'orienter en vis-à-vis du premier instrument, et le moteur principal 15 actionne le bras principal 14 pour le faire revenir à proximité de la face 81 de la structure porteuse 80.

Dans un autre mode de réalisation de l'invention, le mécanisme de déploiement 13 peut comprendre un bras secondaire 21 relié au bras principal 14 en un deuxième point d'attache 22 d'une part et au deuxième instrument 12 d'autre part. Le bras secondaire 21 permet de déterminer l'orientation du deuxième instrument 12 par rapport au premier instrument 11 et à la structure porteuse 80.

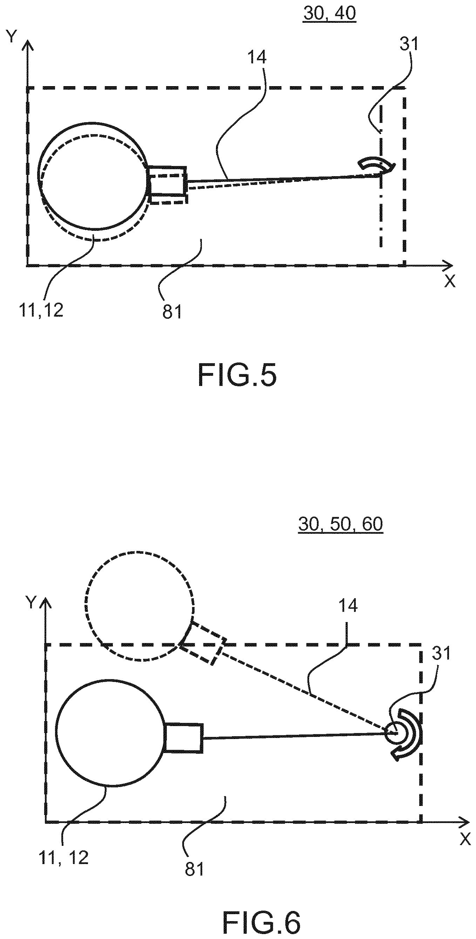

La **figure 5** représente schématiquement une vue de dessus de la face 81 de la structure porteuse 80 sur laquelle repose un mode de réalisation du dispositif de déploiement 40 selon l'invention. Comme expliqué précédemment, le moteur principal 15 est configuré pour actionner le bras principal 14. Préférentiellement, l'actionnement du bras principal 14 se fait en rotation par rapport à la face 81 de la structure porteuse 80 selon un axe principal de rotation 31.

Si on définit la face 81 de la structure porteuse 80 comme s'étendant selon un plan XY défini par un premier axe X et par un deuxième axe Y, perpendiculaire ou sensiblement perpendiculaire au premier axe X, l'axe principal 31 peut être parallèle au plan XY, comme représenté sur la figure 5.

La **figure 6** représente schématiquement une vue de dessus de la face 81 de la structure porteuse 80 sur laquelle repose un autre mode de réalisation du dispositif de déploiement 30, 50, 60 selon l'invention. Dans ce mode de réalisation, l'axe principal 31 peut être sécant au plan XY. Sur les autres figures, l'axe principal 31 forme un angle avec la face 81 en configuration déployée et cet angle se situe entre 20 et 40°, préférentiellement à environ 30°. Il peut être perpendiculaire au plan XY, c'est-à-dire à 90°, comme représenté sur la figure 6.

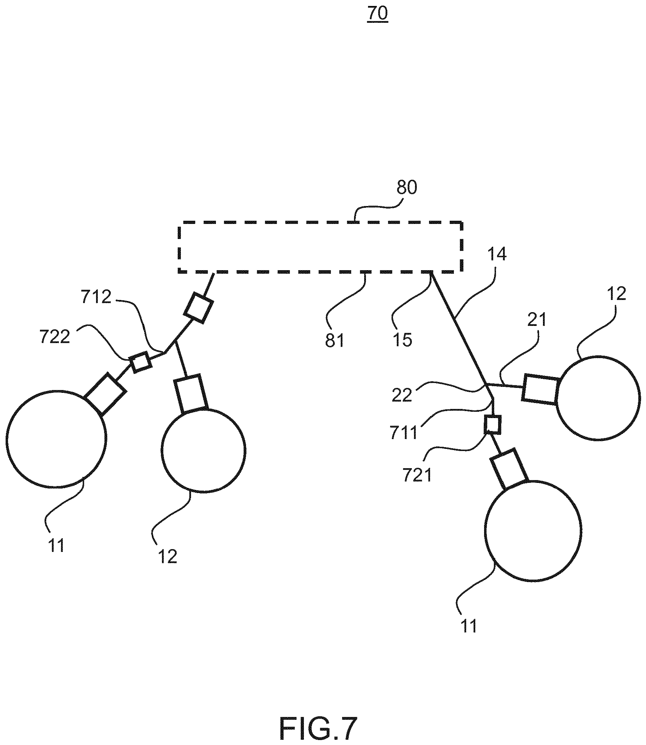

La **figure 7** représente schématiquement un autre mode de réalisation d'un dispositif 70 de déploiement selon l'invention en configuration déployée. Au moins un bras, c'est-à-dire le bras principal 14 et/ou le bras secondaire 21, peut être relié à l'instrument 11, respectivement 12 auquel le bras est relié, par une ou plusieurs sections de bras 711, 712 et un ou plusieurs moteurs 721, 722, chacun associé à une section de bras et configuré pour actionner la section de bras associée, de sorte à positionner l'instrument 11, respectivement 12 auquel ledit bras est relié relativement à l'autre des deux instruments. Dans l'exemple illustré, le bras principal 14 du dispositif de déploiement positionné sur la partie droite du satellite est relié à l'instrument 11 par une section de bras 711 et un moteur 721 associé à la section de bras 711 permettant d'actionner la section de bras 711 pour positionner l'instrument 11 relié au bras principal 14.

Sur le même principe, le bras secondaire 21 pourrait être relié à l'instrument 12 par une autre section de bras 713 avec un moteur 723 (71N et 72N, N étant égal à 3), pour orienter l'instrument 12 relié au bras secondaire 21. D'autres sections de bras sont envisageables. Si un bras est relié par exemple par trois sections de bras à son instrument, alors trois autres moteurs y seront associés.

N étant un nombre entier supérieur ou égal à 1, au moins un des bras 14, 21 peut être relié à l'instrument 11, 12 auquel le bras est relié par N sections de bras 71N et N moteurs 72N, chacun associé à une section de bras et configuré pour actionner la section de bras associée, de sorte à positionner l'instrument 11, 12 auquel ledit bras est relié relativement à l'autre des deux instruments.

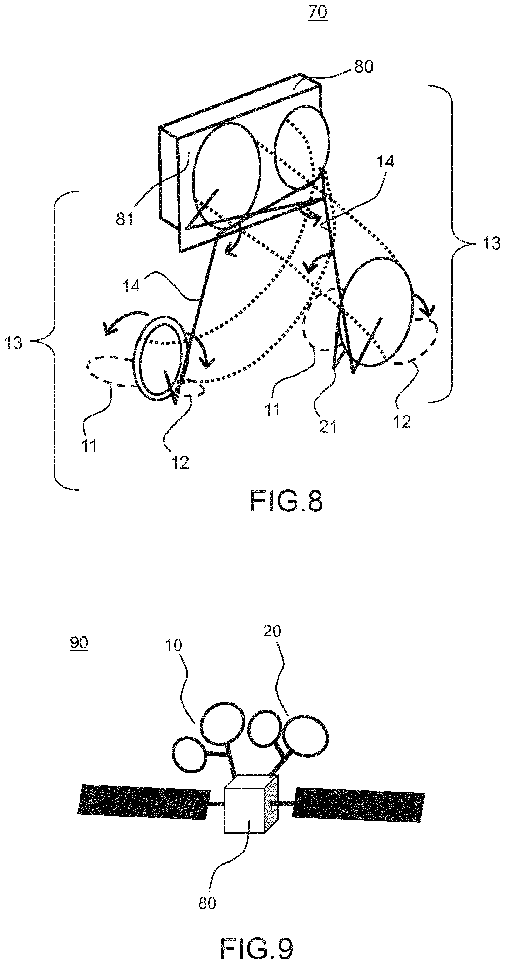

La **figure 8** représente schématiquement une vue de la cinématique de déploiement de deux dispositifs de déploiement selon l'invention. Chaque dispositif comprend un premier instrument 11 et un deuxième instrument 12 (comme discuté précédemment, il pourrait comprendre plus que deux instruments), un mécanisme de déploiement 13 comprenant le bras principal 14 relié à la face 81 de la structure porteuse 80 d'une part et au premier instrument 11 d'autre part, un moteur principal configuré pour actionner le bras principal 14 par rapport à la face 81, et un moteur secondaire 16 configuré pour actionner le deuxième instrument 12 par rapport au bras principal 14.

En se déployant, chaque dispositif de déploiement parcourt une certaine trajectoire prédéfinie et ses éléments (bras et instruments) occupent pendant cette trajectoire un certain volume également prédéfini. Afin d'assurer le bon déploiement des dispositifs sans collision, les bras (principal et secondaire), sections de bras et moteurs sont positionnés en fonction du besoin et des contraintes d'aménagement au cas par cas.

L'invention apporte une solution permettant de réduire d'un facteur 2 le nombre de bras et de mécanismes sur une face de satellite. Cette solution entraîne aussi une réduction de la masse embarquée et du coût en équipements. Enfin, le déploiement des deux instruments à distance l'un de l'autre après le déploiement du bras principal 14 à distance de la structure porteuse 80 apporte de nouvelles possibilités en termes d'aménagement d'antennes.

La **figure 9** représente schématiquement un satellite 90 comprenant au moins un dispositif de déploiement selon l'invention. Sur la figure 8, le satellite comprend deux dispositifs de déploiement 10, 20. Il peut en comprendre trois ou plus. Les dispositifs de déploiement peuvent être identiques entre eux, ou différents selon les variantes présentées ci-dessus.

Les dispositifs ici représentés comprennent deux antennes 11, 12, mais chaque dispositif de déploiement peut comprendre plus de deux instruments.

Enfin, les dispositifs de déploiement peuvent être sur une seule face de la structure porteuse 80 ou bien sur différentes faces de la structure porteuse 80 selon l'utilisation souhaitée des instruments.

## Revendications

1. Dispositif de déploiement (10, 20, 30, 40, 50, 60, 70) destiné à être positionné sur une structure porteuse (80), comprenant:
• un premier instrument (11) et un deuxième instrument (12),
• un mécanisme de déploiement (13) comprenant :
∘ un bras principal (14) pouvant être relié à une face (81) de la structure porteuse (80) en un premier point d'attache (82) d'une part et au premier instrument (11) d'autre part, le deuxième instrument (12) étant relié au bras principal (14),
∘ un moteur principal (15) configuré pour actionner le bras principal (14) par rapport à la face (81),
∘ un moteur secondaire (16) configuré pour actionner le deuxième instrument (12) par rapport au bras principal (14),
ledit dispositif de déploiement étant **caractérisé en ce que** les deux instruments (11, 12) sont aptes à passer d'une configuration stockée l'un sur l'autre sur la face (81) de la structure porteuse (80) à une configuration déployée dans laquelle les deux instruments (11, 12) sont à distance l'un de l'autre et de la structure porteuse (80), et/ou inversement, par déplacement du deuxième instrument (12) en rotation par le moteur secondaire (16).

2. Dispositif de déploiement (20, 30, 40, 50, 60, 70) selon la revendication 1, **caractérisé en ce que** le mécanisme de déploiement (13) comprend un bras secondaire (21) relié au bras principal (14) en un deuxième point d'attache (22) d'une part et au deuxième instrument (12) d'autre part.

3. Dispositif de déploiement (30, 40, 50, 60, 70) selon la revendication 1 ou 2, **caractérisé en ce que** le moteur principal (15) est configuré pour actionner le bras principal (14) en rotation par rapport à la face (81) de la structure porteuse (80) selon un axe principal de rotation (31).

4. Dispositif de déploiement (40, 70) selon la revendication 3, **caractérisé en ce que** la face (81) de la structure porteuse (80) s'étend selon un plan (XY) défini par un premier axe (X) et par un deuxième axe (Y) sensiblement perpendiculaire au premier axe (X), et **en ce que** l'axe principal (31) est apte à être parallèle au plan (XY).

5. Dispositif de déploiement (50, 60, 70) selon la revendication 3, **caractérisé en ce que** la face (81) de la structure porteuse (80) s'étend selon un plan (XY) défini par un premier axe (X) et par un deuxième axe (Y) sensiblement perpendiculaire au premier axe (X), et **en ce que** l'axe principal (31) est apte à être sécant au plan (XY).

6. Dispositif de déploiement (60, 70) selon la revendication 5, **caractérisé en ce que** l'axe principal (31) est perpendiculaire au plan (XY).

7. Dispositif de déploiement (70) selon l'une des revendications 1 à 6, N étant un nombre entier supérieur ou égal à 1, **caractérisé en ce qu'**au moins le bras principal (14) et/ou le bras secondaire (21) s'il est présent est relié à l'instrument (11, 12) auquel le bras est relié par N sections de bras (71N) et N moteurs (72N), chacun associé à une section de bras et configuré pour actionner la section de bras associée, de sorte à positionner l'instrument (11, 12) auquel ledit bras est relié relativement à l'autre des deux instruments.

8. Dispositif de déploiement (10, 20, 30, 40, 50, 60, 70) selon l'une quelconque des revendications précédentes, **caractérisé en ce que** les instruments sont des antennes.

9. Satellite (90) **caractérisé en ce qu'**il comprend au moins un dispositif de déploiement (10, 20, 30, 40, 50, 60, 70) selon l'une des revendications précédentes.

## Patentansprüche

1. Entfaltungsvorrichtung (10, 20, 30, 40, 50, 60, 70) zur Positionierung an einer Trägerstruktur (80), Folgendes umfassend:
• ein erstes Instrument (11) und ein zweites Instrument (12),
• einen Entfaltungsmechanismus (13), Folgendes umfassend:
∘ einen Hauptarm (14), der an einem ersten Befestigungspunkt (82) einerseits mit einer Fläche (81) der Trägerstruktur (80) und andererseits mit dem ersten Instrument (11) verbunden werden kann, wobei das zweite Instrument (12) mit dem Hauptarm (14) verbunden ist,
∘ einen Hauptmotor (15), der so konfiguriert ist, dass er den Hauptarm (14) in Bezug auf die Fläche (81) betätigt,
∘ einen sekundären Motor (16), der so konfiguriert ist, dass er das zweite Instrument (12) in Bezug auf den Hauptarm (14) betätigt,
wobei die Entfaltungsvorrichtung **dadurch gekennzeichnet ist, dass** die beiden Instrumente (11, 12) in der Lage sind, von einer Konfiguration, in der sie übereinander auf der Fläche (81) der Trägerstruktur (80) gelagert sind, zu einer entfalteten Konfiguration, in der die beiden Instrumente (11, 12) voneinander und von der Trägerstruktur (80) beabstandet sind, und/oder umgekehrt, durch Rotationsbewegung des zweiten Instruments (12) durch den sekundären Motor (16) zu wechseln.

2. Entfaltungsvorrichtung (20, 30, 40, 50, 60, 70) nach Anspruch 1, **dadurch gekennzeichnet, dass** der Entfaltungsmechanismus (13) einen sekundären Arm (21) umfasst, der einerseits mit dem Hauptarm (14) an einem zweiten Befestigungspunkt (22) und andererseits mit dem zweiten Instrument (12) verbunden ist.

3. Entfaltungsvorrichtung (30, 40, 50, 60, 70) nach Anspruch 1 oder 2, **dadurch gekennzeichnet, dass** der Hauptmotor (15) so konfiguriert ist, dass er den Hauptarm (14) so betätigt, dass er sich in Bezug auf die Fläche (81) der Trägerstruktur (80) um eine Hauptrotationsachse (31) dreht.

4. Entfaltungsvorrichtung (40, 70) nach Anspruch 3, **dadurch gekennzeichnet, dass** sich die Fläche (81) der Trägerstruktur (80) entlang einer Ebene (XY) erstreckt, die durch eine erste Achse (X) und durch eine zweite Achse (Y), die im Wesentlichen senkrecht zur ersten Achse (X) verläuft, definiert ist, und dass die Hauptachse (31) in der Lage ist, parallel zur Ebene (XY) zu sein.

5. Entfaltungsvorrichtung (50, 60, 70) nach Anspruch 3, **dadurch gekennzeichnet, dass** sich die Fläche (81) der Trägerstruktur (80) entlang einer Ebene (XY) erstreckt, die durch eine erste Achse (X) und durch eine zweite Achse (Y), die im Wesentlichen senkrecht zur ersten Achse (X) verläuft, definiert ist, und dass die Hauptachse (31) in der Lage ist, sich mit der Ebene (XY) zu schneiden.

6. Entfaltungsvorrichtung (60, 70) nach Anspruch 5, **dadurch gekennzeichnet, dass** die Hauptachse (31) senkrecht zur Ebene (XY) ist.

7. Entfaltungsvorrichtung (70) nach einem der Ansprüche 1 bis 6, wobei N eine Ganzzahl größer oder gleich 1 ist, **dadurch gekennzeichnet, dass** mindestens der Hauptarm (14) und/oder der sekundäre Arm (21), falls vorhanden, mit dem Instrument (11, 12) verbunden ist, mit dem der Arm durch N Armabschnitte (71N) und N Motoren (72N) verbunden ist, von denen jeder einem Armabschnitt zugeordnet und so konfiguriert ist, dass er den zugeordneten Armabschnitt betätigt, um das Instrument (11, 12), mit dem der Arm verbunden ist, in Bezug auf das andere der beiden Instrumente zu positionieren.

8. Entfaltungsvorrichtung (10, 20, 30, 40, 50, 60, 70) nach einem der vorhergehenden Ansprüche, **dadurch gekennzeichnet, dass** die Instrumente Antennen sind.

9. Satellit (90), **dadurch gekennzeichnet, dass** er mindestens eine Entfaltungsvorrichtung (10, 20, 30, 40, 50, 60, 70) nach einem der vorhergehenden Ansprüche umfasst.

## Claims

1. A deployment device (10, 20, 30, 40, 50, 60, 70) to be positioned on a supporting structure (80), comprising:
• a first instrument (11) and a second instrument (12),
• a deployment mechanism (13) comprising:
∘ a main arm (14) connectable to a face (81) of the supporting structure (80) at a first attachment point (82) on the one hand and to the first instrument (11) on the other hand, the second instrument (12) being connected to the main arm (14),
∘ a main motor (15) configured to actuate the main arm (14) relative to the face (81),
∘ a secondary motor (16) configured to actuate the second instrument (12) relative to the main arm (14),
said deployment device being **characterised in that** the two instruments (11, 12) are able to pass from a stored configuration, one on the other on the face (81) of the supporting structure (80), to a deployed configuration in which the two instruments (11, 12) are remote from one another and from the supporting structure (80), and/or vice versa, through rotational movement of the second instrument (12) by the secondary motor (16).

2. The deployment device (20, 30, 40, 50, 60, 70) according to claim 1, **characterised in that** the deployment mechanism (13) comprises a secondary arm (21) connected to the main arm (14) at a second attachment point (22) on the one hand and to the second instrument (12) on the other hand.

3. The deployment device (30, 40, 50, 60, 70) according to claim 1 or 2, **characterised in that** the main motor (15) is configured to actuate the main arm (14) in rotation relative to the face (81) of the supporting structure (80) around a main axis of rotation (31).

4. The deployment device (40, 70) according to claim 3, **characterised in that** the face (81) of the supporting structure (80) extends along a plane (XY) defined by a first axis (X) and by a second axis (Y) that is substantially perpendicular to the first axis (X), and **in that** the main axis (31) is able to be parallel to the plane (XY).

5. The deployment device (50, 60, 70) according to claim 3, **characterised in that** the face (81) of the supporting structure (80) extends along a plane (XY) defined by a first axis (X) and by a second axis (Y) that is substantially perpendicular to the first axis (X), and **in that** the main axis (31) is able to intersect the plane (XY).

6. The deployment device (60, 70) according to claim 5, **characterised in that** the main axis (31) is perpendicular to the plane (XY).

7. The deployment device (70) according to one of claims 1 to 6, N being an integer greater than or equal to 1, **characterised in that** at least the main arm (14) and/or the secondary arm (21), if present, is connected to the instrument (11, 12) to which the arm is connected by N arm sections (71N) and N motors (72N), each one associated with an arm section and configured to actuate the associated arm section, so as to position the instrument (11, 12) to which said arm is connected relative to the other of the two instruments.

8. The deployment device (10, 20, 30, 40, 50, 60, 70) according to any one of the preceding claims, **characterised in that** the instruments are antennas.

9. A satellite (90), **characterised in that** it comprises at least one deployment device (10, 20, 30, 40, 50, 60, 70) according to one of the preceding claims.
